# EUROPEAN PATENT APPLICATION

(11) **EP 2 549 676 A2**
(43) Date of publication of application: **23.01.2013**
(21) Application number: 12176796.6
(22) Date of filing: 18.07.2012
(51) Int. Cl.: H04L 1/18

(54) **Method of performing retransmissions by using different resources and related communication device**

(30) Priority: 19.07.2011 US 201161509481 P; 19.07.2011 US 201161509472 P; 05.06.2012 US 201213488455
(71) Applicant: Industrial Technology Research Institute, Chutung, Hsinchu 310 (TW)
(72) Inventor: Ho, Chung-Lien, 300 Hsinchu City (TW); Yang, Hua-Lung, 110 Taipei City (TW); Yen, Chia-Pang, 111 Taipei City (TW)
(74) Representative: Becker Kurig Straus

(57) **Abstract**

A method of performing a retransmission of a packet from at least one transmission point of a wireless communication system to a mobile device in the wireless communication system is disclosed. The method comprises transmitting the packet from the at least one transmission point to the mobile device by using a first resource group in a first transmission; and transmitting the packet from the at least one transmission point to the mobile device by using a second resource group in a second transmission, after transmitting the packet in the first transmission, wherein the first resource group and the second resource group are different resource groups.

## Description

### Field of the Invention

The present invention relates to a method of performing retransmissions by using different resources in a wireless communication system and related communication device.

### Background of the Invention

A long-term evolution (LTE) system supporting the 3GPP Rel-8 standard and/or the 3GPP Rel-9 standard are developed by the 3rd Generation Partnership Project (3GPP) as a successor of a universal mobile telecommunications system (UMTS), for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint transmission/reception (CoMP), uplink (UL) multiple-input multiple-output (MIMO), etc. For a UE and an eNB to communicate with each other in the LTE-A system, the UE and the eNB must support standards developed for the LTE-A system, such as the 3GPP Rel-10 standard or later versions.

A hybrid automatic repeat request (HARQ) process is used in a communication system (e.g., the LTE system and the LTE-A system) to provide both efficient and reliable communications. Different from an automatic repeat request (ARQ) process, a forward error correcting code (FEC) and soft combining are used for the HARQ process. In detail, before a transmitter (e.g., eNB) transmits a packet (e.g., a data stream, a frame or a transport block) including multiple coded bits to a receiver (e.g., UE), the transmitter divides the packet into multiple blocks, i.e., multiple redundancy versions. The transmitter only transmits one of the redundancy versions in each transmission or retransmission. According to whether the same redundancy version is transmitted in the retransmission, the soft combining used for the HARQ can be classified into two categories: chase combining (CC) and incremental redundancy (IR). When the same redundancy version of the packet is transmitted in each retransmission, the HARQ is a CC-based HARQ. When a different redundancy version of the packet is transmitted in each retransmission, the HARQ is an IR-based HARQ.

For example, after the transmitter transmits a redundancy version of the packet to the receiver in the first transmission, the receiver feeds back an acknowledgment (ACK) if the receiver can recover the packet by decoding the redundancy version. Oppositely, the receiver feeds back a negative acknowledgment (NACK) to the transmitter, if the receiver cannot recover the packet by decoding the redundancy version. In this situation, the receiver stores the redundancy reversion of the packet in a soft buffer of the receiver, and waits for the transmitter to retransmit a redundancy version of the packet in the second transmission (i.e., the first retransmission). The redundancy versions in the first transmission and the second transmission are the same if the HARQ is the CC-based HARQ, and are different if the HARQ is the IR-based HARQ. After the receiver receives the redundancy version in the second transmission, the receiver decodes the redundancy versions (either the same or different) jointly, to recover the packet. Thus, the packet can be recovered with a high probability. The receiver continues the HARQ process (i.e., accumulates redundancy versions of the packet) until the packet is recovered or a maximum number of retransmissions is reached. Since the packet with few errors can be recovered by using the FEC without feeding back the NACK, i.e., requesting a retransmission, and the packet with more errors can be recovered by decoding the redundancy versions jointly, throughput of the communication system is increased due to fewer retransmissions.

The CA is introduced to the LTE-A system by which more than one component carriers (CCs) are aggregated to achieve a wide-band transmission. Accordingly, the LTE-A system can support a wide bandwidth up to 100MHz by aggregating a maximum number of 5 CCs, where a maximum bandwidth of each CC is 20MHz and is backward compatible with the 3GPP Rel-8 standard. The LTE-A system supports the CA for both contiguous and non-contiguous CCs. The CA increases bandwidth flexibility by aggregating the CCs. When a UE is configured with the CA, the UE has the ability to receive and/or transmit packets on one or multiple CCs to increase throughput. In the LTE-A system, it is possible that an eNB configures the UE different numbers of uplink (UL) CCs and downlink (DL) CCs. Moreover, the CCs configured to the UE necessarily consists of one DL primary CC (PCC) and one UL PCC. The most important feature of the DL PCC and the UL PCC is exchanging control information between the UE and the eNB. CCs other than the PCCs are named UL secondary CCs (SCCs) or DL SCCs. Numbers of the UL and DL SCCs are arbitrary, and are related to capability of the UE and available radio resources.

On the other hand, when the CoMP is configured to a UE and multiple transmission points (e.g., an eNB, a relay node or a remote antenna of an eNB), the UE may communicate with the transmission points simultaneously, i.e., access a service via all or part of the transmission points. For example, a transmission point can be an eNB, a relay node or a remote antenna of an eNB (e.g., remote radio head (RRH)). More specifically, an eNB may manage only one transmission point, or may manage multiple transmission points. That is, Cell identities (IDs) of different transmission points may be different (e.g., when being managed by different eNBs), or may be the same (e.g., when being managed by the same eNB). Thus, signals transmitted between the UE and the transmission points can be easily recovered due to better quality of the signals.

In detail, when the transmission points are involved in the CoMP, one of the transmission points is a serving point (i.e., serving cell). In general, link quality between the serving point and the UE is better than link qualities between other transmission points and the UE. Further, the CoMP can be classified into two main categories: Joint Processing (JP) and Coordinated Scheduling/Beamforming (CS/CB). A main difference between the JP and the CS/CB is that data of the UE is available at all the transmission points when the JP is configured (i.e. enabled), while the data of the UE is only available at the serving point when the CS/CB is configured. The JP can be further classified into two categories: joint transmission and dynamic point selection. When the joint transmission is configured, the data of the UE can be transmitted from multiple transmission points (e.g., coherently or noncoherently) to the UE to improve signal quality and/or cancel interferences. When the dynamic point selection is configured, the data of the UE is transmitted from only one of the transmission points (e.g., according to a choice or suggestion of the UE) to the UE to improve the signal quality and/or avoid the interferences. On the other hand, when the CS/CB is configured, the data of the UE is only transmitted from the serving point to the UE, while other transmission points may adjust scheduling (e.g., stop their transmissions), or adjust beamforming (e.g., move their beams) to mitigate the interferences.

However, according to the prior art, when the HARQ process is operated with the CoMP, a packet for a UE can only be transmitted from the same transmission point by using the same resource to the UE. That is, after a transmission point transmits the packet to the UE by using a set of resource blocks, retransmissions of the packet can only be performed by the same transmission point by using the same set of resource blocks. If link quality between the UE and the transmission point is bad or a channel experienced by the set of resource blocks is bad, a large number of retransmissions are required for recovering the packet. Thus, diversity supported by the CoMP is not realized due to the rule of performing the retransmissions of the packet by the same transmission point by using the same resource. As a result, throughput of the UE can not be maximized when operating the CoMP. Therefore, maximizing the throughput of the UE when the HARQ process is operated with the CoMP is a topic to be discussed.

### Summary of the Invention

This in mind, the application aims at providing a method and at least one transmission point of a wireless communication system for performing retransmissions by using different resources to solve the abovementioned problem.

This is achieved by a method and at least one transmission point handling a soft buffer for carrier aggregation according to claims 1 and 13. The dependent claims pertain to corresponding further developments and improvements.

As will be seen more clearly from the detailed description following below, the claimed method of performing a retransmission of a packet from at least one transmission point of a wireless communication system to a mobile device in the wireless communication system is disclosed. The method comprises transmitting the packet from the at least one transmission point to the mobile device by using a first resource group in a first transmission; and transmitting the packet from the at least one transmission point to the mobile device by using a second resource group in a second transmission, after transmitting the packet in the first transmission, wherein the first resource group and the second resource group are different resource groups.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a schematic diagram of performing retransmissions of packets by using different resource groups according to the present invention.
Fig. 5 is a schematic diagram of performing retransmissions of packets by using different resource groups at multiple component carriers according to the present invention.
Fig. 6 is a schematic diagram of performing retransmissions of packets by using different resource groups at multiple component carriers according to the present invention.
Fig. 7 is a schematic diagram of performing retransmissions of packets by using multiple transmission points and different resource groups at multiple component carriers according to the present invention.
Fig. 8 is a schematic diagram of performing retransmissions of packets by using different layers according to the present invention.

### Detailed Description

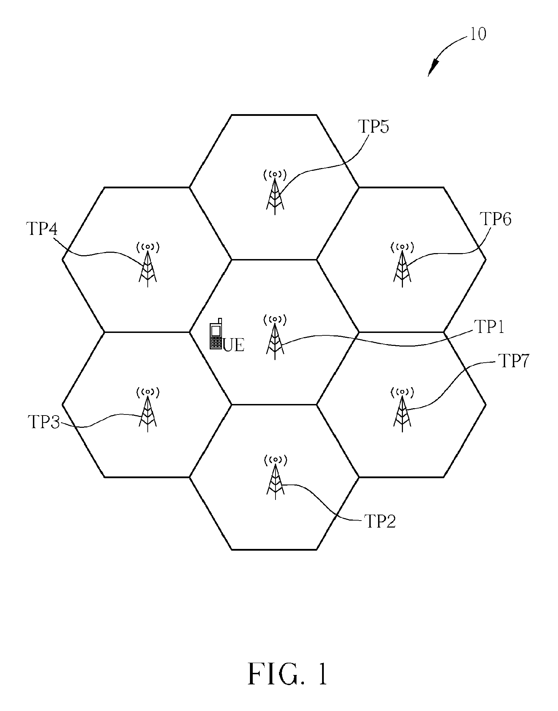

Please refer to Fig. 1, which is a schematic diagram of a wireless communication system 10 according to an example of the present invention. The wireless communication system 10 is briefly composed of a UE and 7 transmission points TP1-TP7, wherein each of the transmission points TP1-TP7 can perform data transmissions and receptions with the UE. The wireless communication system 10 may be a wideband code division multiple access (WCDMA) system such as a universal mobile telecommunications system (UMTS). Alternatively, the wireless communication system 10 may be an orthogonal frequency division multiplexing (OFDM) system and/or an orthogonal frequency division multiple access (OFDMA) system, such as a long term evolution (LTE) system, a LTE-Advanced (LTE-A) system or a successor of the LTE-A system. Besides, the UE and the transmission points TP1-TP7 can operate a hybrid automatic repeat request (HARQ) process, for improving throughput of the UE, wherein soft combining used for the HARQ process can be chase combining (CC) or incremental redundancy (IR).

Please note that, the UE and the transmission points TP1-TP7 are simply utilized for illustrating a structure of the wireless communication system 10. Practically, the transmission points TP1-TP7 can be referred as NodeBs (NBs) in a universal terrestrial radio access network (UTRAN) of the UMTS, or evolved NodeBs (eNBs), relay nodes and/or remote radio heads (RRHs) in an evolved UTRAN (E-UTRAN) of the LTE system or the LTE-A system, and are not limited herein. The UE can be mobile devices such as mobile phones, laptops, tablet computers, electronic books, and portable computer systems. Besides, a transmission point and the UE can be seen as a transmitter or a receiver according to transmission direction, e.g., for an uplink (UL), the UE is the transmitter and the transmission point is the receiver, and for a downlink (DL), the transmission point is the transmitter and the UE is the receiver.

Besides, the wireless communication system 10 can be seen as a multi-point cooperative network composed of multiple transmission points. That is, the UE may transmit a signal (e.g., a packet) to a first set of the transmission points TP1-TP7, and the UE may receive the signal transmitted by a second set of the transmission points TP1-TP7, wherein the first set and the second set may be the same or different. As a result, signal quality of the signal is improved. For example, when the wireless communication system 10 is referred to the LTE-A system, it means that the wireless communication system 10 supports coordinated multi-point transmission/reception (CoMP). The CoMP can be configured as Joint Processing (JP) (e.g. joint transmission or dynamic point selection) or Coordinated Scheduling/Beamforming (CS/CB), and is not limited. Further, without loss of generality, the transmission point TP1 can be seen as a serving point (i.e., serving cell) for the UE, wherein link quality between the transmission point TP1 and the UE is better than link qualities between other transmission points and the UE.

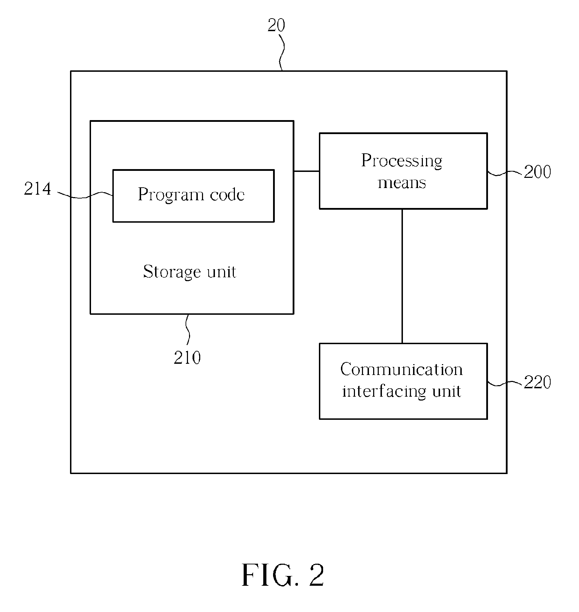

Please refer to Fig. 2, which is a schematic diagram of a communication device 20 according to an example of the present invention. The communication device 20 can be the UE or a transmission point shown in Fig. 1, but is not limited herein. The communication device 20 may include a processing means 200 such as a microprocessor or an Application Specific Integrated Circuit (ASIC), a storage unit 210 and a communication interfacing unit 220. The storage unit 210 may be any data storage device that can store a program code 214, accessed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver, and can transmit and receive wireless signals according to processing results of the processing means 200.

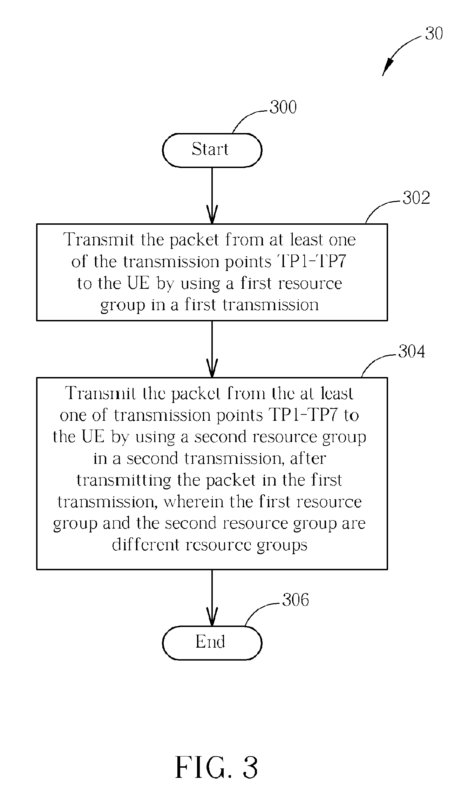

Please refer to Fig. 3, which is a flowchart of a process 30 according to an example of the present invention. The process 30 is utilized in the transmission points TP1-TP7 in Fig. 1, for performing a retransmission of a packet from one or more of the transmission points TP1-TP7 to the UE. The process 30 may be compiled into the program code 214 and includes the following steps:
- Step 300:: Start.
- Step 302:: Transmit the packet from at least one of the transmission points TP1-TP7 to the UE by using a first resource group in a first transmission.
- Step 304:: Transmit the packet from the at least one of transmission points TP1-TP7 to the UE by using a second resource group in a second transmission, after transmitting the packet in the first transmission, wherein the first resource group and the second resource group are different resource groups.
- Step 306:: End.

According to the process 30, after at least one of the transmission points TP1-TP7 transmits the packet to the UE by using a first resource group in a first transmission, the UE is unable to recover (e.g., decode) the packet successfully and requests the retransmission of the packet. Then, in a second transmission (i.e., a first retransmission), the at least one of transmission points TP1-TP7 transmits the packet to the UE by using a second resource group, wherein the first resource group and the second resource group are different resource groups. Since channels experienced by the packet are usually uncorrelated (e.g., different), when the packet is transmitted by using the first resource group and the second resource group. It is unlikely that channel qualities of the channels are both poor at the same time and the UE is unable to recover the packet. Thus, after the UE receives and combines the packets transmitted by using the two resource groups, it is highly possible that the UE can recover the packet successfully. Even if the UE is still unable to recover the packet after the second transmission, the UE can continue the process 30, i.e., the packet is retransmitted from the at least one of transmission points TP1-TP7 to the UE by using a third resource group in a third transmission wherein the third resource group is different from the second resource group, until the packet is recovered or a maximum number of retransmissions is reached. Therefore, diversity is provided by transmitting the packet by using different resource groups, and the packet can be recovered in fewer retransmissions. As a result, throughput of the UE can be improved.

Please note that, a goal of the present invention is that a retransmission of a packet is performed by using different resource groups to realize (i.e., obtain) diversity provided by the different resource groups, such that throughput of the UE can be improved. Realization of the process 30 is not limited.

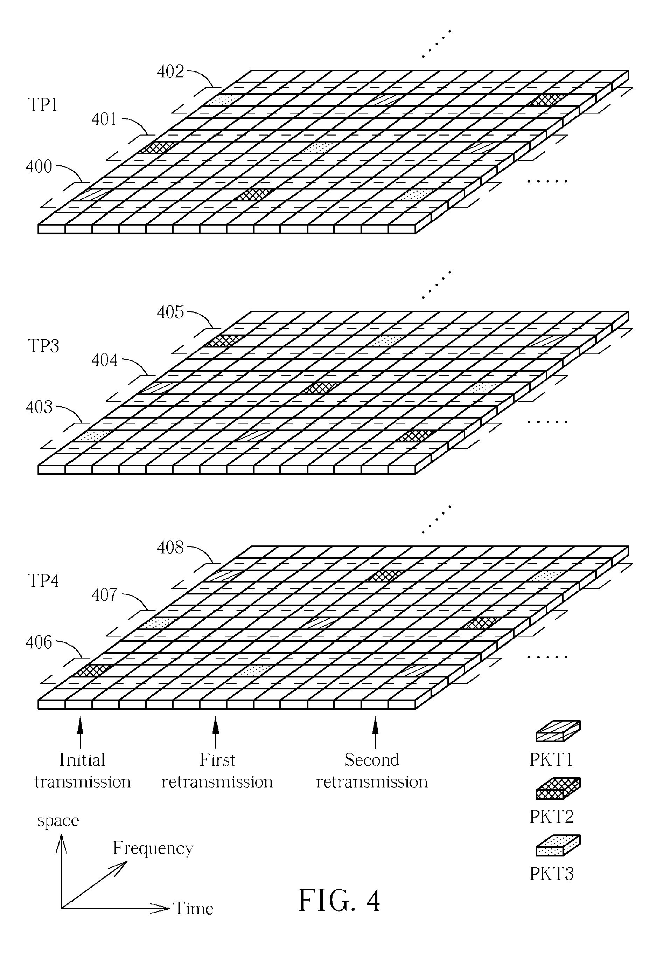

Please refer to Fig. 4, which is a schematic diagram of performing retransmissions of packets by using different resource groups according to the present invention. In Fig. 4, resource blocks allocated to a UE for performing initial transmissions or retransmissions of packets are represented by painted squares, and resource blocks that are not used or allocated to other UEs are represented by blank squares. In detail, the UE prepares to receive packets PKT1-PKT3 from the transmission points TP1, TP3 and TP4 by using resource blocks 400-408, wherein the painted squares in the same row are represented by a corresponding resource block (i.e. one of the resource blocks 400-408). Reference axes such as time (i.e., transmissions and retransmissions), frequency (i.e., resource blocks) and space (i.e., transmission points) are also shown in Fig. 4. Preferably, a one-to-one correspondence is assumed for the resource blocks according to frequency indices (i.e., subcarrier indices) of the resource blocks. For example, the frequency indices of the resource blocks 400, 403 and 406 are the same, the frequency indices of the resource blocks 401, 404 and 407 are the same, and the frequency indices of the resource blocks 402, 405 and 408 are the same. For ease of illustration, the resource blocks 400-408 are divided into 3 resource groups RG1-RG3, wherein the resource group RG1 includes the resource blocks 400, 404 and 408, the resource group RG2 includes the resource blocks 401, 405 and 406, and the resource group RG3 includes the resource blocks 402, 403 and 407.

Transmission of the packet PKT1 is first described as follows. In the initial transmission, the packet PKT1 is transmitted from the transmission points TP1, TP3 and TP4 to the UE by using the resource group RG1. After the UE receives the packet PKT1 by using the resource group RG1, the UE is unable to recover the packet PKT1. The UE requests a first retransmission of the packet PKT1, e.g., by feeding back a negative acknowledgment (NACK) corresponding to the packet PKT1. Then, the transmission points TP1, TP3 and TP4 retransmit the packet PKT1 to the UE by using the resource group RG3 in the first retransmission. That is, the first retransmission is performed by using a resource group different from that used in the initial transmission. If the UE is still unable to recover the packet PKT1 after the first retransmission, the transmission points TP1, TP3 and TP4 can retransmit the packet PKT1 to the UE by using the resource group RG2 in a second retransmission. The above description is operated until the UE can recover the packet PKT1 (e.g., after the second retransmission) or a maximum number of retransmission is reached. Similarly, the packet PKT2 is transmitted from the transmission points TP1, TP3 and TP4 by using the resource groups RG2, RG1 and RG3 in the initial transmission, the first retransmission and the second retransmission, respectively. Besides, the packet PKT3 is transmitted from the transmission points TP1, TP3 and TP4 by using the resource groups RG3, RG2 and RG1 in the initial transmission, the first retransmission and the second retransmission, respectively.

Therefore, according to the above illustration, transmissions (e.g., retransmissions) of a packet are performed by using different resource groups. Diversity can be realized for the retransmissions such that the packet can be recovered in fewer retransmissions. As a result, throughput of the UE is improved. Besides, since multiple packets are transmitted to the UE in each of the transmissions, the throughput of the UE is further improved.

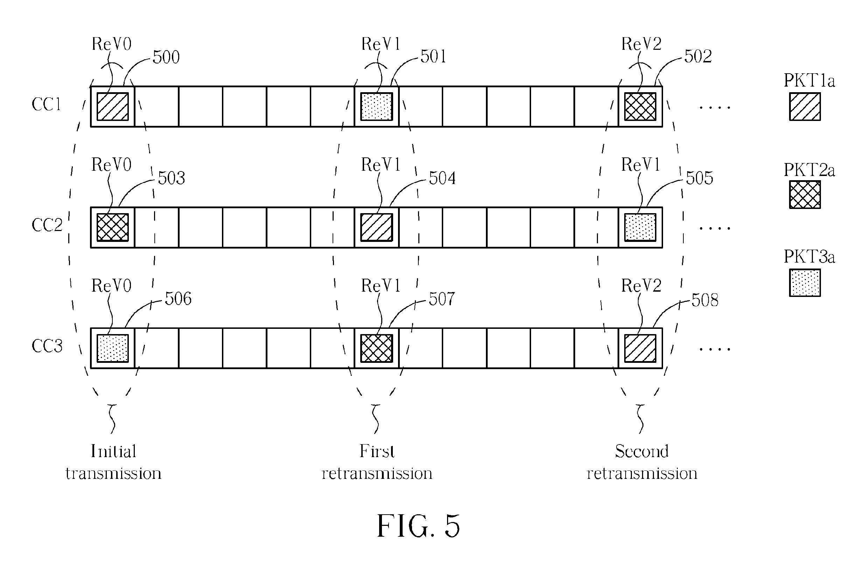

On the other hand, the present invention can also be realized by using multiple component carriers, to provide different resource groups. The resource groups are used by one of the transmission points TP1-TP7 (e.g., the transmission point TP1), for transmitting packets to the UE. For example, please refer to Fig. 5, which is a schematic diagram of performing retransmissions of packets by using different resource groups at multiple component carriers according to the present invention. In Fig. 5, component carriers CC1-CC3 are used for providing different resource groups. Resource groups allocated to a UE for performing initial transmissions or retransmissions of packets are represented by painted squares, and resource groups that are not used or allocated to other UEs are represented by blank squares.

In detail, the UE prepares to receive packets PKT1 a-PKT3a from the transmission point TP1 by using resource groups 500-508 at the component carriers CC1-CC3. Since the incremental redundancy is used for the HARQ in Fig. 5, there are multiple redundancy versions for each of the packets PKT1a-PKT3a. That is, when a retransmission is required for recovering a packet, a different redundancy version of the packet may be transmitted in the retransmission. A number of the redundancy versions of the packets PKT1 a-PKT3a used in the retransmissions may not be the same. For example, the numbers of the redundancy versions of the packets PKT1 a-PKT3a are 3, 3 and 2, respectively, as shown in Fig. 5. The redundancy versions are labeled as ReV0-ReV2 according to the number of the redundancy versions. Transmission of the packet PKT1 a is first described as follows. After the transmission point TP1 transmits the redundancy version ReV0 of the packet PKT1a to the UE in an initial transmission by using the resource group 500 at the component carrier CC1, the UE is unable to recover the packet PKT1a. The UE requests a first retransmission of the packet PKT1a, e.g., by feeding back a NACK corresponding to the packet PKT1a. Then, the transmission point TP1 retransmits the redundancy version ReV1 of the packet PKT1 a in the first retransmission by using the resource group 504 at the component carrier CC2. That is, the first retransmission is performed by using a component carrier (i.e., a resource group) different from that is used in the initial transmission. If the UE is still unable to recover the packet PKT1 a after the first retransmission, the transmission point TP1 can retransmit the redundancy version ReV2 of the packet PKT1a in a second retransmission by using the resource group 508 at the component carrier CC3. The above description is operated until the UE can recover the packet PKT1 a (e.g., after the second retransmission) or a maximum number of retransmissions is reached.

Similarly, the redundancy versions ReV0-ReV2 of the packet PKT2a are transmitted from the transmission point TP1 to the UE by using the resource group 503 at the component carrier CC2, the resource group 507 at the component carrier CC3 and the resource group 502 at the component carrier CC1 in the initial transmission, the first retransmission and the second retransmission, respectively, since the UE is unable to recover the packet PKT2a before the second retransmission. Besides, the redundancy versions ReV0-ReV1 of the packet PKT3a are transmitted from the transmission point TP1 to the UE by using the resource group 506 at the component carrier CC3 and the resource group 501 at the component carrier CC1 in the initial transmission and the first retransmission, respectively. Then, the redundancy version ReV1 of the packet PKT3a is transmitted again from the transmission point TP1 to the UE by using the resource group 505 at the component carrier CC2 in the second retransmission, since the UE is unable to recover the packet PKT3a before the second retransmission. In other words, the redundancy versions of the packets are not required to be the same in the same retransmission, and the redundancy version of the packet is not required to be different in successive transmissions.

Please note that, the packets are transmitted by the transmission point TP1 (i.e., only one transmission point) to the UE in the above example. However, the packets can also be transmitted by a set of the transmission points TP1-TP7 (e.g., the transmission points TP1 and TP3), and is not limited. Therefore, according to the above illustration, transmissions (e.g., retransmissions) of redundancy versions of a packet are performed by using different component carriers (i.e., resource groups). Diversity can be realized for the retransmissions such that the packet can be recovered in fewer retransmissions. As a result, throughput of the UE is improved. Besides, since multiple packets are transmitted to the UE in each of the transmissions, the throughput of the UE is further improved.

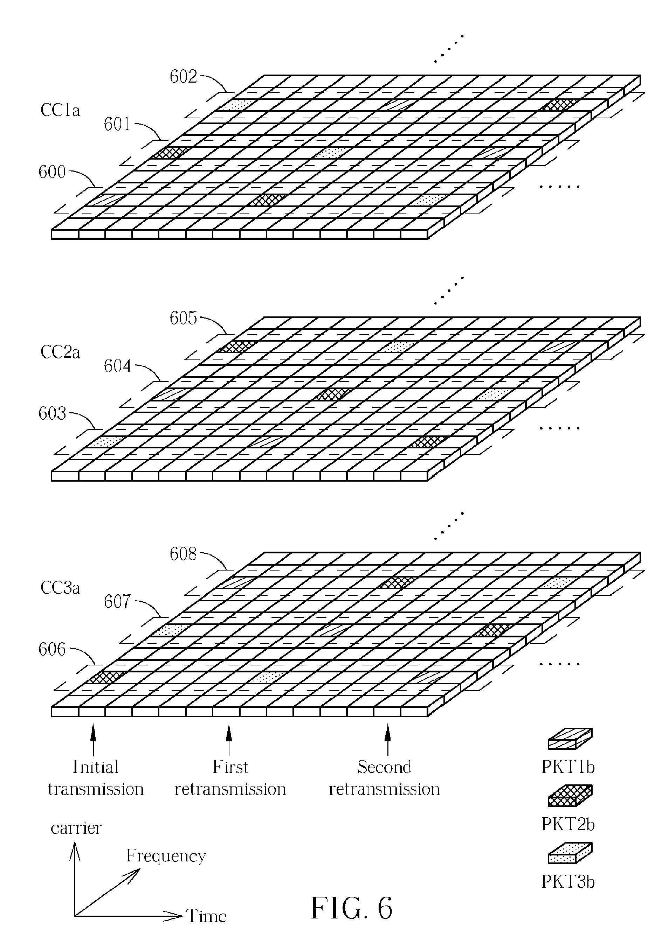

Please refer to Fig. 6, which is a schematic diagram of performing retransmissions of packets by using different resource groups at multiple component carriers according to the present invention. Similar to Fig. 5, multiple component carriers are used for providing different resource groups. In Fig. 6, resource blocks allocated to a UE for performing initial transmissions or retransmissions of packets are represented by painted squares, and resource blocks that are not used or allocated to other UEs are represented by blank squares.

In detail, the UE prepares to receive packets PKT1 b-PKT3b from one of the transmission points TP1-TP7 (e.g., the transmission point TP1) by using resource blocks 600-608 at 3 component carriers CC1a-CC3a, wherein the painted squares in the same row are represented by a corresponding resource block (i.e. one of the resource blocks 600-608). Reference axes such as time (i.e., transmissions and retransmissions), frequency (i.e., resource blocks) and carrier (i.e., component carriers) are also shown in Fig. 6. For ease of illustration, the resource blocks 600-608 are divided into 3 resource groups RG1 a-RG3a, wherein the resource group RG1 a includes the resource blocks 600, 604 and 608, the resource group RG2a includes the resource blocks 601, 605 and 606, and the resource group RG3a includes the resource blocks 602, 603 and 607. In other words, each of the resource groups RG1 a-RG3a includes resource blocks distributed over the component carriers CC1a-CC3a.

Transmission of the packet PKT1 b is first described as follows. In the initial transmission, the packet PKT1 b is transmitted from the transmission point TP1 to the UE by using the resource group RG1a. After the UE receives the packet PKT1 b by using the resource group RG1 a, the UE is unable to recover the packet PKT1 b. The UE requests a first retransmission of the packet PKT1 b, e.g., by feeding back a NACK corresponding to the packet PKT1 b. Then, the transmission point TP1 retransmits the packet PKT1 b to the UE by using the resource group RG3a in the first retransmission. That is, the first retransmission is performed by using a resource group different from that used in the initial transmission. If the UE is still unable to recover the packet PKT1 b after the first retransmission, the transmission point TP1 can retransmit the packet PKT1 b to the UE by using the resource group RG2a in a second retransmission. The above description is operated until the UE can recover the packet PKT1 b (e.g., after the second retransmission) or a maximum number of retransmission is reached. Similarly, the packet PKT2b is transmitted from the transmission point TP1 to the UE by using the resource groups RG2a, RG1 a and RG3a in the initial transmission, the first retransmission and the second retransmission, respectively. Besides, the packet PKT3b is transmitted from the transmission point TP1 to the UE by using the resource groups RG3a, RG2a and RG1a in the initial transmission, the first retransmission and the second retransmission, respectively.

Please note that, the packets are transmitted by the transmission point TP1 (i.e., only one transmission point) to the UE in the above example. However, the packets can also be transmitted by a set of the transmission points TP1-TP7 (e.g., the transmission points TP1 and TP3), and is not limited. Therefore, according to the above illustration, transmissions (e.g., retransmissions) of a packet are performed by using different resource groups. Diversity can be realized for the retransmissions such that the packet can be recovered in fewer retransmissions. As a result, throughput of the UE is improved. Besides, since multiple packets are transmitted to the UE in each of the transmissions, the throughput of the UE is further improved.

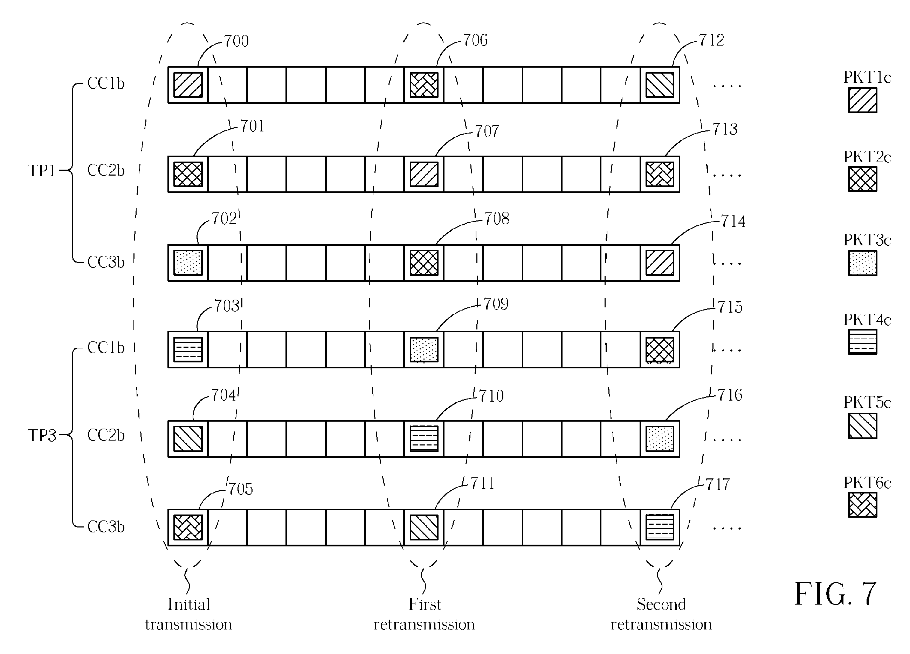

On the other hand, the present invention can also be realized by using both multiple transmission points and multiple component carriers, to provide different resource groups. Different from Fig. 5 and Fig. 6, the resource groups at the component carriers are used by two of the transmission points TP1-TP7 (e.g., the transmission point TP1 and TP3), for transmitting packets to the UE. For example, please refer to Fig. 7, which is a schematic diagram of performing retransmissions of packets by using multiple transmission points and different resource groups at multiple component carriers according to the present invention. In Fig. 7, component carriers CC1 b-CC3b are used for providing resource groups. Resource groups allocated to a UE for performing initial transmissions or retransmissions of packets are represented by painted squares, and resource groups that are not used or allocated to other UEs are represented by blank squares.

In detail, the UE prepares to receive packets PKT1 c-PKT6c from the transmission points TP1 and TP3 by using resource groups 700-717 at the component carriers CC1 b-CC3b. In an initial transmission, the packets PKT1c-PKT3c are transmitted from the transmission points TP1 to the UE by using the resource groups 700-702, respectively, and the packets PKT4c-PKT6c are transmitted from the transmission points TP3 to the UE by using the resource groups 703-705, respectively. If a first retransmission is required for transmitting the packets PKT1 c-PKT6c, a resource group different from that used in the first transmission is used for each of the packets PKT1 c-PKT6c. As shown in Fig. 7, the packets PKT1 c-PKT3c are transmitted from the transmission point TP1 (by using the resource groups 707 and 708) and the transmission point TP3 (by using the resource group 709) to the UE in the first retransmission. The packets PKT4c-PKT6c are transmitted from the transmission point TP1 (by using the resource group 706) and the transmission point TP3 (by using the resource groups 710 and 711) to the UE in the first retransmission.

Similarly, if the UE is still unable to recover the packets PKT1 c-PKT6c after the first retransmission, the UE requests a second retransmission. As shown in Fig. 7, the packets PKT1 c-PKT3c are transmitted from the transmission point TP1 (by using the resource group 714) and the transmission point TP3 (by using the resource groups 715 and 716) to the UE in the second retransmission. The packets PKT4c-PKT6c are transmitted from the transmission point TP1 (by using the resource groups 712 and 713) and the transmission point TP3 (by using the resource group 717) to the UE in the second retransmission.

It is worth noting that both the resource group and the transmission point can be changed at the same time when retransmitting a packet. For example, the resource group and the transmission point used for retransmitting the packets PKT3c and PKT6c are changed in the first retransmission, and the resource group and the transmission point used for retransmitting the packets PKT2c and PKT5c are changed in the second retransmission. Thus, more diversities (i.e., frequency and space) are obtained when both the resource group and the transmission point are changed at the same time in a single retransmission. Besides, a more general example can be obtained from Fig. 7 by replacing the transmission points TP1 and TP3 with a first set and a second set of the transmission points TP1-TP7, respectively, wherein the first set and the second of the transmission points TP1-TP7 can be partly different or completely different.

Therefore, according to the above illustration, transmissions (e.g., retransmissions) of a packet are performed by using different component carriers (i.e., resource groups) and different transmission points. Diversity can be realized for the retransmissions such that the packet can be recovered in fewer retransmissions. As a result, throughput of the UE is improved. Besides, since multiple packets are transmitted to the UE in each of the transmissions, the throughput of the UE is further improved.

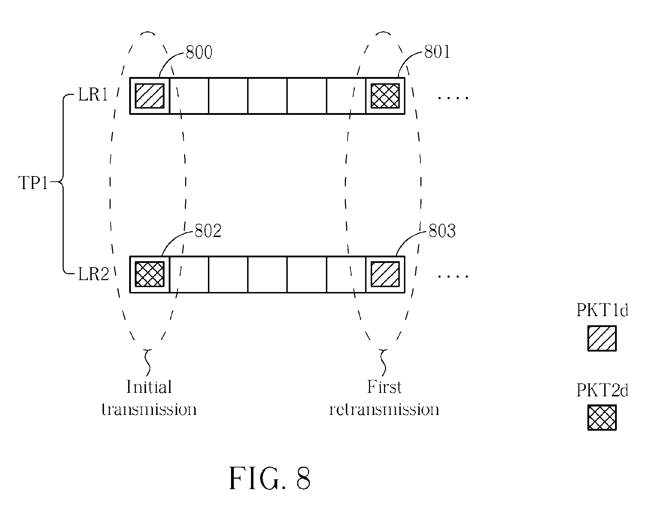

On the other hand, the present invention can also be realized by using multiple layers of a transmission point (e.g., the transmission point TP1). That is, multiple layers of the transmission point TP1 are used for providing multiple resource groups. For example, please refer to Fig. 8, which is a schematic diagram of performing retransmissions of packets by using different layers according to the present invention. In Fig. 8, layers LR1 and LR2 (i.e., at least two transmit antennas) of the transmission point TP1 are used for providing different resource groups. That is, the resource groups 800 and 801 are provided by the layer LR1, and the resource groups 802 and 803 are provided by the layer LR2. Resource groups allocated to a UE for performing initial transmissions or retransmissions of packets are represented by painted squares, and resource groups that are not used or allocated to other UEs are represented by blank squares.

In detail, the UE prepares to receive packets PKT1d and PKT2d from the transmission point TP1 by using resource groups 800-803 provided by the layers LR1 and LR2. Transmission of the packet PKT1 d is described as follows. After the transmission point TP1 transmits the packet PKT1d to the UE in an initial transmission by using the resource group 800 provided by the layer LR1, the UE is unable to recover the packet PKT1d. The UE requests a first retransmission of the packet PKT1d, e.g., by feeding back a NACK corresponding to the packet PKT1d. Then, the transmission point TP1 retransmits the packet PKT1d in the first retransmission by using the resource group 803 provided by the layer LR2. That is, the first retransmission is performed by using a layer (i.e., a resource group) different from that is used in the initial transmission. The above description can be operated until the UE can recover the packet PKT1 d (e.g., after the first retransmission) or a maximum number of retransmission is reached. Similarly, the packet PKT2d is transmitted from the transmission point TP1 to the UE by using the resource group 802 (provided by the layer LR2) and the resource group 801 (provided by the layer LR1) in the initial transmission and the first retransmission, respectively, since the UE is unable to recover the packet PKT2d before the first retransmission.

Therefore, according to the above illustration, transmissions (e.g., retransmissions) of a packet are performed by using different resource groups provided by different layers. Diversity can be realized for the retransmissions such that the packet can be recovered in fewer retransmissions. As a result, throughput of the UE is improved. Besides, since multiple packets are transmitted to the UE in each of the transmissions, the throughput of the UE is further improved.

Please note that, as shown in Figs. 4, 6, 7 and 8, the chase combining is used for the HARQ. That is, when a retransmission is required for recovering a packet, the same packet (i.e., the same redundancy version of the packet) is transmitted in each of the retransmissions. However, this is not a restriction for realizing the present invention, and the incremental redundancy can be used in Figs. 4, 6, 7 and 8 after modifications are made. For example, different redundancy versions of the packets PKT1-PKT3, different redundancy versions of the packets PKT1 b-PKT3b and different redundancy versions of the packets PKT1 c-PKT6c can be transmitted to the UE in the retransmissions, when the incremental redundancy is used for the HARQ. Similarly, the incremental redundancy is used for the HARQ in Fig. 5. Similarly, the chase combining can be used instead by transmitting the same redundancy version of the packet in each retransmission in Fig. 5.

Besides, the transmission points TP1, TP3 and TP4 used in Fig. 1 and the transmission points TP1 and TP3 used in Fig. 7 are only for illustration purposes. In fact, a number of the transmission points involving in transmitting a packet to the UE is not limited, and the transmission points involving in transmitting the packet to the UE may be determined (e.g., selected) according to a decision of the UE, a location of the UE, a decision of the serving point (i.e., transmission point TP1), coordination between the transmission points TP1-TP7, or may be determined randomly, and is not limited herein. Furthermore, only retransmissions of the packets are shown in the above examples, i.e., assuming that the UE is unable to recover all the packets in an example. However, when a packet in the example is recovered by the UE and a retransmission of the packet is not required, the resource group scheduled for the packet can be used for transmitting another packet, for using resources efficiently.

Furthermore, a resource group used in the above figures can be seen as a concept of resource, and should not be limited to a specific amount of resource, a specific type of resource or a specific resource pattern. For example, the resource group can include only a single resource block or a set of resource blocks, wherein the set of resource blocks may be composed of consecutive and/or nonconsecutive resource blocks (e.g., Figs. 4 and 6). Besides, the resource groups are not required to be determined (e.g., changed, selected) in each transmission (e.g., retransmission). For example, the resource groups used for transmitting the packet to the UE are changed only in selected retransmissions, and are not changed in the rest of the retransmissions.

On the other hand, packets transmitted from respective transmission points to the UE in a transmission can be the same, partly different or completely different. In other words, differences between the packets are not limited. For example, please refer back to Fig. 4, the packet PKT1 and the packet PKT2 can be the same packet. Alternatively, each of the packet PKT1 and the packet PKT2 includes 2 subblocks, wherein the first subblock of the packet PKT1 and the first subblock of the packet PKT2 are the same, and the second subblock of the packet PKT1 and the second subblock of the packet PKT2 are different. Alternatively, the packet PKT1 and the packet PKT2 can be completely different.

Those skilled in the art should readily make combinations, modifications and/or alterations on the abovementioned examples (e.g., Figs. 4-8) according to the present invention. The abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present invention provides a method of performing retransmissions by using different resources (i.e., resource groups). According to the present invention, retransmissions of a packet are performed from at least one transmission point to the UE by using different resource groups. Diversity can be realized for the retransmissions such that the packet can be recovered in fewer retransmissions. As a result, throughput of the UE is improved. Besides, since more resource groups are provided by using (i.e., aggregating) more component carriers, more resource groups are provided in a single transmission (e.g., retransmission). The throughput of the UE can be further improved.

## Claims

1. A method of performing a retransmission of a packet from at least one transmission point of a wireless communication system to a mobile device in the wireless communication system, **characterized by** the method comprising:
transmitting the packet from the at least one transmission point to the mobile device by using a first resource group in a first transmission; and
transmitting the packet from the at least one transmission point to the mobile device by using a second resource group in a second transmission, after transmitting the packet in the first transmission, wherein the first resource group and the second resource group are different resource groups.

2. The method of claim 1, **characterized in that** the first transmission and the second transmission are retransmissions.

3. The method of claim 1, **characterized in that** the first transmission is an initial transmission.

4. The method of claim 1, **characterized in that** a first redundancy version of the packet is transmitted from the at least one transmission point to the mobile device by using the first resource group in the first transmission, and a second redundancy version of the packet is transmitted from the at least one transmission point to the mobile device by using the second resource group in the second transmission.

5. The method of claim 4, **characterized in that** the first redundancy version and the second redundancy version are the same redundancy version.

6. The method of claim 1, **characterized in that** the first resource group and the second resource group are determined according to a decision of the mobile device or a decision of a serving point of the at least one transmission point, for transmitting the packet to the mobile device.

7. The method of claim 1, **characterized in that** the first resource group and the second resource group are determined according to coordination between the at least one transmission point, for transmitting the packet to the mobile device.

8. The method of claim 1, **characterized in that** the first resource group and the second resource group are determined randomly, for transmitting the packet to the mobile device.

9. The method of claim 1, **characterized in that** resource blocks comprised in the first resource group and resource blocks comprised in the second resource group are different.

10. The method of claim 1, **characterized in that** the first resource group and the second resource group are at different component carriers.

11. The method of claim 1, **characterized in that** the packet is transmitted from a first set of the at least one transmission point to the mobile device by using the first resource group in the first transmission, and the packet is transmitted from a second set of the at least one transmission point to the mobile device by using the second resource group in the second transmission.

12. The method of claim 1, **characterized in that** the first resource group is a first layer of a transmission point of the at least one transmission point, and the second resource group is a second layer of the transmission point of the at least one transmission point.

13. At least one transmission point of a wireless communication system for performing a retransmission of a packet to a mobile device in the wireless communication system, **characterized by** the at least one transmission point comprising:
means for transmitting the packet from the at least one transmission point to the mobile device by using a first resource group in a first transmission; and
means for transmitting the packet from the at least one transmission point to the mobile device by using a second resource group in a second transmission, after transmitting the packet in the first transmission, wherein the first resource group and the second resource group are different resource groups.

14. The at least one transmission point of claim 13, **characterized in that** the first transmission and the second transmission are retransmissions.

15. The at least one transmission point of claim 13, **characterized in that** the first transmission is an initial transmission.

16. The at least one transmission point of claim 13, **characterized in that** a first redundancy version of the packet is transmitted from the at least one transmission point to the mobile device by using the first resource group in the first transmission, and a second redundancy version of the packet is transmitted from the at least one transmission point to the mobile device by using the second resource group in the second transmission.

17. The at least one transmission point of claim 16, **characterized in that** the first redundancy version and the second redundancy version are the same redundancy version.

18. The at least one transmission point of claim 13, **characterized in that** the first resource group and the second resource group are determined according to a decision of the mobile device or a decision of a serving point of the at least one transmission point, for transmitting the packet to the mobile device.

19. The at least one transmission point of claim 13, **characterized in that** the first resource group and the second resource group are determined according to coordination between the at least one transmission point, for transmitting the packet to the mobile device.

20. The at least one transmission point of claim 13, **characterized in that** the first resource group and the second resource group are determined randomly, for transmitting the packet to the mobile device.

21. The at least one transmission point of claim 13, **characterized in that** resource blocks comprised in the first resource group and resource blocks comprised in the second resource group are different.

22. The at least one transmission point of claim 13, **characterized in that** the first resource group and the second resource group are at different component carriers.

23. The at least one transmission point of claim 13, **characterized in that** the packet is transmitted from a first set of the at least one transmission point to the mobile device by using the first resource group in the first transmission, and the packet is transmitted from a second set of the at least one transmission point to the mobile device by using the second resource group in the second transmission.

24. The at least one transmission point of claim 13, **characterized in that** the first resource group is a first layer of a transmission point of the at least one transmission point, and the second resource group is a second layer of the transmission point of the at least one transmission point.
